# FASCICULE DE BREVET EUROPEEN

(11) **EP 2 000 977 B1**
(45) Date de publication et mention de la délivrance du brevet: **10.04.2019**
(21) Numéro de dépôt: 08157471.7
(22) Date de dépôt: 03.06.2008
(51) Int. Cl.: G06T 7/00, G06T 7/20

(54) **Procédé de détection d'un véhicule**
Erfassungsverfahren eines Fahrzeugs
Vehicle detection method

(30) Priorité: 08.06.2007 FR 0704119
(43) Date de publication de la demande: 10.12.2008
(73) Titulaire: VALEO VISION, 93012 Bobigny (FR)
(72) Inventeur: Charpentier, Adrien, 75011 Paris (FR)
(74) Mandataire: Claassen, Maarten Pieter

(56) Documents cités:
- US-B1- 6 218 960
- BROGGI A ET AL: "Multi-resolution vehicle detection using artificial vision" INTELLIGENT VEHICLES SYMPOSIUM, 2004 IEEE PARMA, ITALY JUNE 14-17, 2004, PISCATAWAY, NJ, USA,IEEE, 14 juin 2004 (2004-06-14), pages 310-314, XP010727487 ISBN: 0-7803-8310-9
- HONG CHENG ET AL: "Vanishing Point and Gabor Feature Based Multi-resolution On-Road Vehicle Detection" ADVANCES IN NEURAL NETWORKS - ISNN 2006 LECTURE NOTES IN COMPUTER SCIENCE;;LNCS, SPRINGER-VERLAG, BE, vol. 3973, 2006, pages 46-51, XP019034038 ISBN: 3-540-34482-9
- ZEHANG SUN ET AL: "On-road vehicle detection using optical sensors: a review" INTELLIGENT TRANSPORTATION SYSTEMS, 2004. PROCEEDINGS. THE 7TH INTERNATIONAL IEEE CONFERENCE ON WASHINGTON, DC, USA OCT. 3-6, 2004, PISCATAWAY, NJ, USA,IEEE, 3 octobre 2004 (2004-10-03), pages 585-590, XP010772164 ISBN: 0-7803-8500-4
- GRAEFE V ET AL: "A novel approach for the detection of vehicles on freeways by real-time vision" INTELLIGENT VEHICLES SYMPOSIUM, 1996., PROCEEDINGS OF THE 1996 IEEE TOKYO, JAPAN 19-20 SEPT. 1996, NEW YORK, NY, USA,IEEE, US, 19 septembre 1996 (1996-09-19), pages 363-368, XP010209764 ISBN: 0-7803-3652-6

## Description

### Domaine de l'invention

La présente invention concerne un procédé de détection d'un objet cible dans un environnement se trouvant dans le champ d'une caméra vidéo, la caméra étant apte à acquérir une pluralité d'images, et un dispositif de détection permettant de mettre en oeuvre ledit procédé.

Elle trouve une application particulière dans le domaine des véhicules automobiles.

### Etat de la technique

Dans le cas d'une application à un véhicule automobile, un procédé de détection connu de l'état de la technique comporte une caméra vidéo visant vers l'avant du véhicule et permettant d'acquérir une image de l'environnement du véhicule. Une détection d'un objet cible devant un véhicule référentiel, par exemple un autre véhicule, prend énormément de temps de traitement. Aussi, afin de réduire ce temps, et de permettre une détection en temps réel, le procédé sous-échantillonne l'image acquise par la caméra (le nombres de pixels dans l'image est réduit) avant d'effectuer la détection d'objets.

Un des problèmes de cet état de la technique est que si un objet se situe loin du véhicule référentiel, il n'est pas bien détecté car trop petit dans l'image altérée. De ce fait, la détection d'un tel objet devient difficile.

Dans "Multi-Resolution Vehicle Detection using Artificial Vision", 2004, IEEE Intelligent Vehicle Symposium, Alberto Broggi et al. decrivent une solution alternative basée sur des régions d'intérêt placées et sous-échantillonnées en fonction de la position d'un objet cible dans une image.

### Objet de l'invention

La présente invention a pour but de faciliter la détection d'un objet cible qu'il soit proche ou loin de l'objet référentiel et de permettre dans le même temps une détection en temps réel.

Selon un premier objet de l'invention, ce but est atteint par un procédé selon la revendication 1.

Comme on va le voir en détail par la suite, un tel procédé présente l'avantage d'effectuer un traitement en temps réel de la détection d'un objet cible en appliquant des modes de détection différents en fonction de la position à laquelle se situe un objet cible par rapport à un objet référentiel. Selon cette position, une résolution différente va être appliquée à une ou plusieurs régions d'intérêt de l'image acquise, en particulier, une résolution réduite lorsque cet objet sera proche permettant ainsi un gain en calcul, et une résolution plus grande lorsque l'objet cible sera loin de façon à détecter précisément un objet au loin, cette région de plus grande résolution étant combinée à des régions de résolutions réduites pour détecter des objets qui pourraient se rapprocher par exemple.

Dans un mode de réalisation non limitatif, la position d'un objet cible est définie par un éloignement longitudinal dans un axe longitudinal de l'objet référentiel. Cela permet de définir si l'objet cible est proche ou loin de l'objet référentiel et par la suite de conditionner la sélection d'un mode de détection.

Dans un mode de réalisation non limitatif, la position d'un objet cible est en outre définie par un écartement latéral dans un axe longitudinal de l'objet référentiel. Cela permet de voir si l'objet cible se situe devant l'objet référentiel ou sur un de ses côtés et si un véhicule change de voie de circulation dans le cas d'une application véhicule.

Dans un autre mode de réalisation non limitatif, la position d'un objet cible est en outre définie par une position de l'objet cible par rapport à un repère déterminé dans la région d'intérêt définie. Cela permet de voir si l'objet cible se situe devant l'objet référentiel ou sur un de ses côtés et si un véhicule change de voie de circulation dans le cas d'une application véhicule.

Dans un mode de réalisation non limitatif, un premier mode de détection correspond à un sous-échantillonnage d'une région d'intérêt d'une image acquise. Cela permet de détecter les véhicules proches et de réduire le temps de traitement d'une telle détection.

Dans un mode de réalisation non limitatif, un deuxième mode de détection correspond à la définition de trois régions d'intérêt dans une image acquise, dont la première est de résolution égale à celle de l'image acquise et les deux autres sont de résolutions réduites. Un tel découpage d'image avec une telle association de résolution différente, va permettre de détecter en temps réel et de façon précise aussi bien des objets cibles lointains que des objets cibles proches.

Dans un mode de réalisation non limitatif, la sélection du premier mode de détection est effectuée si l'éloignement longitudinal de l'objet cible est inférieur à une première distance déterminée. Cela permet de détecter un objet cible proche dans une région d'intérêt de résolution réduite. La détection est ainsi rapide et peut s'effectuer en temps réel.

Dans un mode de réalisation non limitatif, le deuxième mode de détection est en outre sélectionné si aucun objet cible n'est détecté. Cela va permettre de détecter de futurs objets lointains au fur et à mesure que l'objet référentiel bouge et que l'objet cible bouge.

Dans un mode de réalisation non limitatif, la première région d'intérêt est centrée sur l'image acquise et est de largeur déterminée. Cela va permettre de détecter des objets lointains se trouvant devant l'objet référentiel, et dans le cas d'une application véhicule sur une même voie qu'un véhicule référentiel. Préférentiellement et de manière non limitative, la largeur de la première région d'intérêt correspond à une largeur de voie de circulation de l'objet référentiel.

Dans un mode de réalisation non limitatif, les deuxième et troisième régions d'intérêt comportent une intersection avec la première région d'intérêt. Cela permet d'être sûr de pouvoir détecter l'ensemble des objets cibles se trouvant dans le champ de la caméra.

Dans un mode de réalisation non limitatif, le procédé comporte en outre une étape d'initialisation dans laquelle le mode de détection sélectionné est le premier mode de détection. Cela permet de commencer à chercher des objets cibles proches qui sont les plus urgentes à détecter.

Dans un mode de réalisation non limitatif, le procédé est mis en oeuvre pour la détection d'un objet cible correspondant à un véhicule automobile. Cela permet de déterminer à quelle distance se trouve un véhicule cible d'un autre véhicule et d'effectuer un traitement adéquate selon cette distance, tel que par exemple un suivi automatique de véhicule etc.

Dans un mode de réalisation non limitatif, la première distance déterminée est définie de manière à ce qu'elle soit inférieure ou égale à une distance maximale de détection dans une région d'intérêt de résolution réduite et à ce qu'elle soit également supérieure ou égale à une distance minimale de détection dans une région d'intérêt de pleine résolution. Cette distance permet de définir une frontière entre la détection d'un objet cible proche et d'un objet cible lointain et d'effectuer une transition continue entre les différents modes.

Dans un mode de réalisation non limitatif, le repère déterminé correspond à un marquage au sol de la voie de circulation d'un objet référentiel. Cela permet de détecter un véhicule se situant devant un véhicule référentiel et sur la même voie de circulation et s'il change de voie.

Dans un mode de réalisation non limitatif, la largeur de la première région d'intérêt correspond à une largeur de voie de circulation de l'objet référentiel. Ainsi, les véhicules cibles ayant un éloignement longitudinal supérieur à la première distance et circulant dans la même voie de circulation que le véhicule référentiel peuvent être détectés.

Selon un deuxième objet de l'invention, elle concerne un dispositif de détection selon la revendication 12.

Selon un troisième objet de l'invention, elle concerne un produit programme d'ordinateur selon la revendication 13.

### Brève description des Figures

D'autres caractéristiques et avantages de la présente invention seront mieux compris à l'aide de la description et des dessins non limitatifs parmi lesquels :
- la Fig. 1 représente un diagramme d'un mode de réalisation non limitatif du procédé de détection selon l'invention ;
- la Fig. 2 est une représentation schématique d'une première image acquise par une caméra vidéo et d'une région d'intérêt de l'image sous-échantillonnée selon le procédé de la Fig 1 ;
- la Fig. 3 est une représentation schématique d'une deuxième image acquise par une caméra vidéo et d'une région d'intérêt de l'image sous-échantillonnée selon le procédé de la Fig 1 ;
- la Fig. 4 est une représentation schématique d'une troisième image acquise par une caméra vidéo et d'une région d'intérêt de l'image sous-échantillonnée selon le procédé de la Fig 1 ;
- la Fig. 5 est une représentation schématique d'une image acquise par une caméra vidéo et d'un découpage de l'image en une pluralité de régions d'intérêt selon le procédé de la Fig. 1 ;
- la Fig. 6 est une représentation schématique plus détaillée de la Fig. 5 ; et
- la Fig. 7 est un schéma du dispositif de détection permettant la mise en oeuvre du procédé de la Fig. 1.

### Description détaillée de modes de réalisation non limitatifs de l'invention

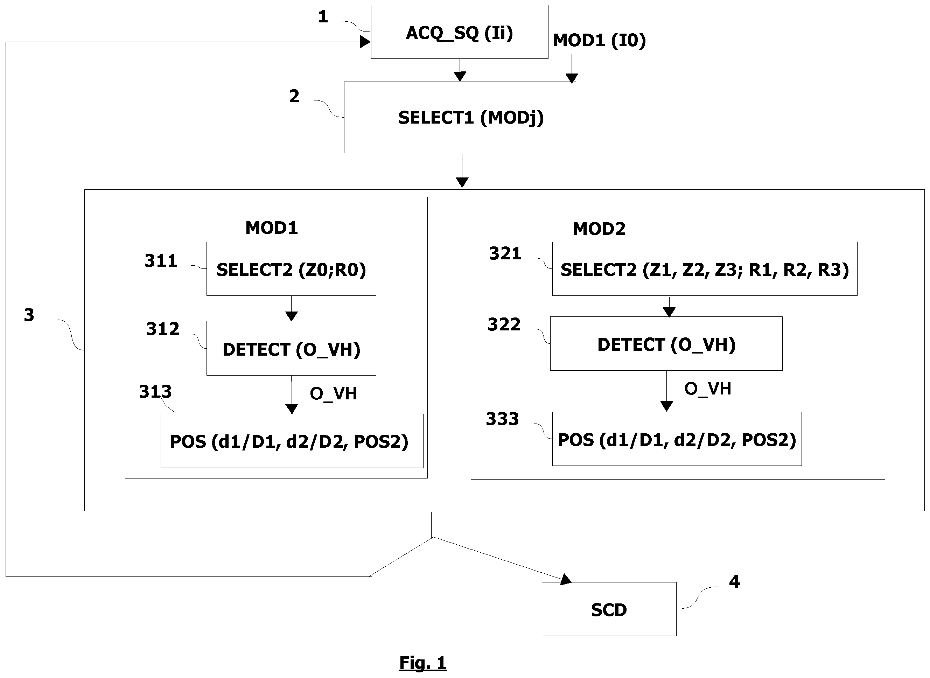

Le procédé de détection d'un objet cible selon l'invention est décrit dans un mode de réalisation non limitatif à la Fig. 1.

Dans le cadre de la description, le procédé est décrit dans le cadre d'une application de la détection d'un objet cible correspondant à un véhicule automobile. Bien entendu, le procédé peut être utilisé dans d'autres domaines tels que la détection d'un objet cible correspondant à un piéton. Dans cette application également, la caméra est embarquée dans un véhicule automobile.

Le procédé de détection comporte les étapes suivantes.

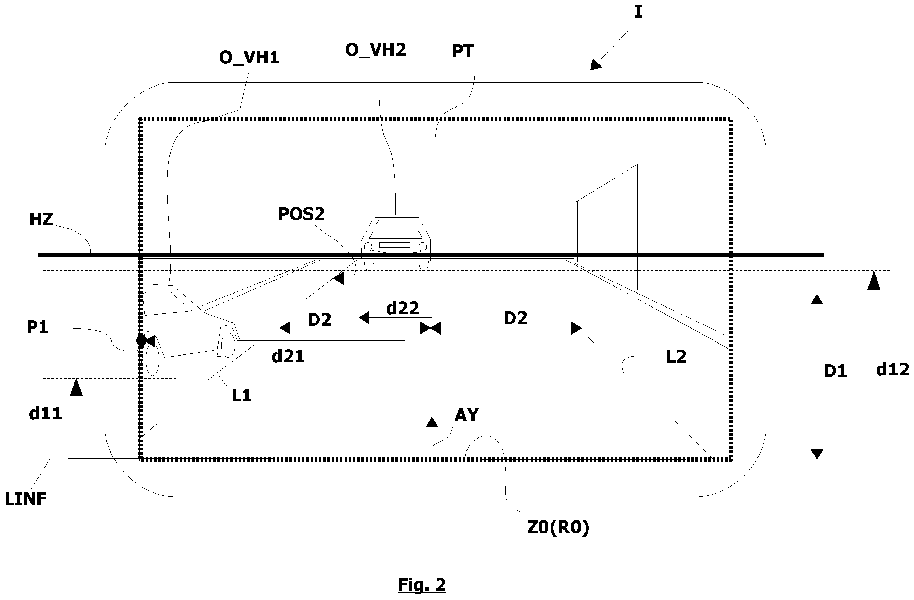

**Dans une première étape 1)**, on acquiert une image Ii de l'environnement d'un objet référentiel, ici un véhicule référentiel R_VH, grâce à une caméra vidéo Cam. Dans un exemple non limitatif, la caméra vidéo acquiert 30 images par seconde. Un exemple non limitatif d'une telle image Ii est représenté sur la Fig. 2.

L'image Ii ainsi acquise est en pleine résolution. Dans un exemple non limitatif, la résolution de la caméra est égale à 640*480 pixels. Bien entendu, une caméra avec une résolution différente peut être utilisée.

On notera que cette étape d'acquisition d'images peut ne pas être compris dans le procédé décrit, mais peut faire partie d'un autre procédé exécuté en amont du procédé décrit.

**Dans une deuxième étape 2),** on sélectionne un mode de détection MODj (j = 1, 2) en fonction d'une position POS d'un objet cible O_VH, dans l'image acquise, par la caméra vidéo Cam, par rapport au véhicule référentiel R_VH. Dans un mode de réalisation non limitatif, cette sélection est initialisée dans une étape d'initialisation (MOD1(I0)) à un premier mode de détection MOD1. Donc, pour la première image acquise I0, le premier mode de détection MOD1 est sélectionné automatiquement.

**Dans une troisième étape 3)**, on exécute le mode de détection sélectionné. Le mode de détection étant initialisé au premier mode de détection MOD1, ce premier mode est exécuté en premier et est décrit ci-après.

### Premier mode de détection MOD1.

Dans un mode de réalisation non limitatif, le premier mode de détection MOD1, que l'on appellera également mode objets proches, correspond à la définition d'un région d'intérêt Z0 dans l'image acquise Ii (i = 0 à m, m entier) et à un sous-échantillonnage de cette région d'intérêt Z0. C'est-à-dire que l'on prend un pixel sur n pixels sur l'axe des abcisses et l'axe des ordonnées dans le repère image de manière à avoir une résolution plus faible que la pleine résolution.

*Ainsi, dans une première sous-étape 311)*, on définit une région d'intérêt Z0 dans l'image Ii acquise par la caméra vidéo Cam et on lui applique une résolution donnée R0.

Dans un premier exemple non limitatif, on prend une région d'intérêt Z0 égale à toute l'image acquise Ii, comme le montre la Fig. 2. Sa limite supérieure est donc le haut de l'image acquise Ii, et sa limite inférieure, la limite inférieure INF de l'image Ii. Le fait de prendre toute l'image, permet de valider la nature des objets cibles détectés (véhicule, arbre, pont etc.).

Dans un exemple non limitatif, en ce qui concerne la résolution réduite R0, on prend un pixel sur deux dans les deux dimensions de manière à obtenir une région d'intérêt sous-échantillonnée Z0 de résolution R0 égale à 320*240 pixels. Cela permet de raccourcir les temps de traitement lors d'une détection d'un objet cible O_VH. En effet, le fait d'avoir une résolution plus faible permet de traiter la détection rapidement, en temps réel et donc de ne pas trop consommer en temps de traitement CPU («Central Process Unit») contrairement à une détection sur une image pleine résolution qui dans ce dernier cas ne peut se faire en temps réel.

Comme on va le voir ci-après, la région d'intérêt sous-échantillonnée Z0 obtenue va permettre de détecter les véhicules cibles O_VH qui sont très proches du véhicule référentiel R_VH, par exemple ceux qui sont sur une voie adjacente au véhicule référentiel R_VH et sur le point de le dépasser, ou qui sont sur la même voie devant le véhicule référentiel R_VH et par-devant une première distance déterminée D1. On a donc une détection au plus tôt des véhicules cibles O_VH.

La première distance déterminée D1 est définie de manière à être inférieure ou égale à une distance maximale de détection D_PMAX dans la région d'intérêt sous-échantillonnée Z0.

En général, la distance maximale de détection D_PMAX d'un objet cible O_VH dans une région d'intérêt Z0 sous-échantillonnée telle que dans l'exemple pris (un pixel sur deux) est de 50 mètres.

Ainsi, dans un premier exemple non limitatif, cette première distance déterminée D1 est de 50 mètres par rapport à l'avant du véhicule référentiel R_VH.

Dans un deuxième exemple non limitatif, cette première distance déterminée D1 est de 40 mètres afin d'avoir une marge de sécurité c'est-à-dire pour avoir une détection certaine. Bien entendu, cette première distance D1 peut être ajustée.

On notera que selon la position de la caméra Cam dans le véhicule référentiel R_VH, le calcul des distances et positions réelles en fonction des distances et positions projetées sur une image acquise par la caméra Cam est connu de l'homme du métier et n'est donc pas décrit ici.

*Dans une deuxième sous-étape 312)*, on détecte un objet cible O_VH dans la région d'intérêt sous-échantillonnée Z0 de l'image acquise Ii par la caméra vidéo Cam, l'objet déterminé se trouvant dans le champ de la caméra Cam.

La caméra vidéo étant placée à l'avant du véhicule référentiel R_VH, l'image acquise Ii, qui permet d'obtenir la région d'intérêt sous-échantillonnée Z0, correspond à l'environnement du véhicule référentiel R_VH se trouvant dans le champ de la caméra Cam et donc à l'avant du véhicule référentiel R_VH. On détecte donc un objet cible O_VH, ici un véhicule cible, se trouvant à l'avant du véhicule référentiel R_VH. Dans un exemple non limitatif, la caméra Cam est placée près du rétroviseur intérieur central du véhicule référentiel R_VH. La détection d'un objet cible dans une image vidéo étant bien connue de l'homme du métier, elle n'est pas décrite ici. On peut par exemple faire une détection à partir des ombres portées sous un véhicule cible O_VH dans l'exemple d'un objet cible véhicule.

Comme on peut le voir à la Fig. 2, deux véhicules cibles O_VH1 et O_VH2 se trouvent dans la région sous-échantillonnée Z0, le premier O_VH1 étant sur une voie adjacente à gauche du véhicule référentiel R_VH, et le deuxième sur la même voie que le véhicule référentiel R_VH.

Le premier véhicule cible O_VH1 va être détecté car il se situe par-devant la première distance déterminée D1 égale dans l'exemple pris à 40 mètres.

On notera que le deuxième véhicule cible O_VH2 sera également détecté s'il se situe par-devant 50 mètres, bien que se situant au-delà de la distance déterminée de 40 mètres.

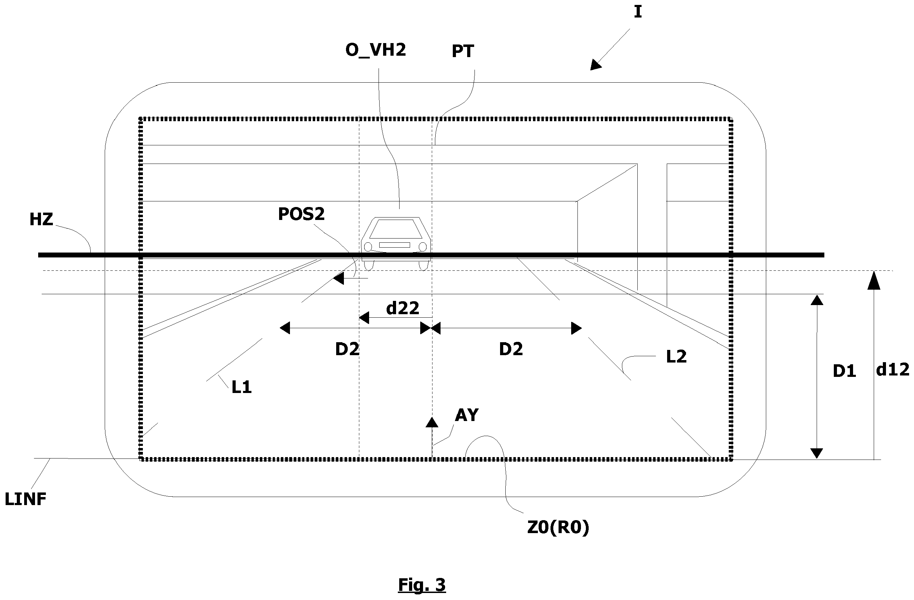

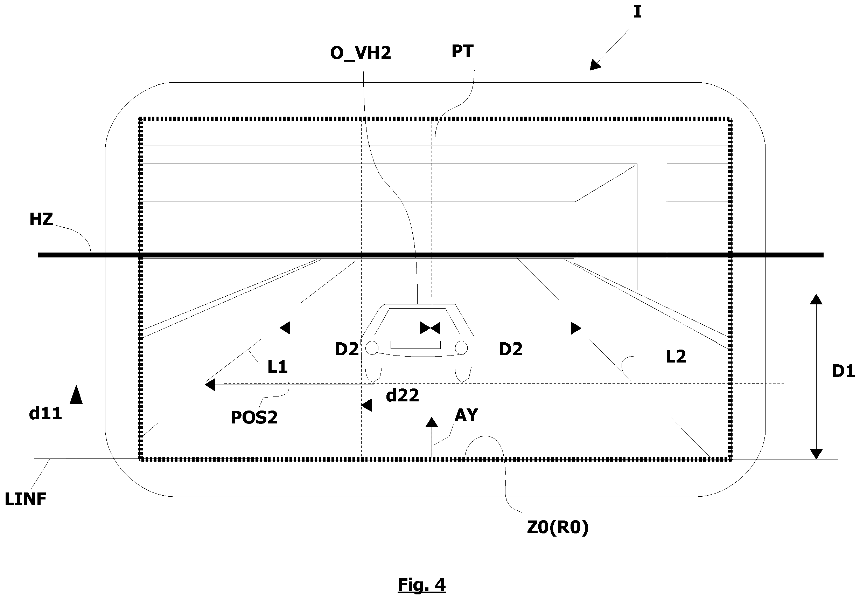

Comme on peut le voir sur l'exemple de la Fig. 3, un seul véhicule cible O_VH2 se trouve dans la région sous-échantillonnée Z0. Il ne sera pas détecté car se situant au-delà de la première distance déterminée D1 (sauf s'il se trouve également par-devant 50 mètres). Comme on peut le voir sur l'exemple de la Fig. 4, un seul véhicule cible O_VH2 se trouve dans la région sous-échantillonnée Z0. Il sera détecté car se situant par-devant la première distance déterminée D1

*Dans une troisième sous-étape 313)*, on calcule la position POS du véhicule cible O_VH détecté par rapport au véhicule référentiel R_VH. La position POS du véhicule cible O_VH est définie par un éloignement longitudinal d1 dans un axe longitudinal AY du véhicule référentiel R_VH.

Dans un premier mode de réalisation non limitatif, la position du véhicule cible O_VH est en outre définie par un écartement latéral d2 dans l'axe longitudinal AY du véhicule référentiel R_VH. Ce premier mode permet de savoir si le véhicule cible O_VH se trouve dans la même voie de circulation que le véhicule référentiel R_VH.

Dans un deuxième mode de réalisation non limitatif, la position POS du véhicule cible O_VH est en outre définie par une position relative POS2 du véhicule cible par rapport à un repère déterminé L dans la région d'intérêt définie, ici Z0. Ce repère est dans l'exemple de l'application véhicule un marquage au sol L1/L2 (détecté par traitement d'image) de la voie de circulation du véhicule référentiel R_VH. Le repère déterminé L est fonction ainsi ici du véhicule référentiel R_VH puisqu'il correspond à la voie de circulation référentielle sur laquelle circule le véhicule référentiel R_VH. Si ce dernier change de voie, le repère change également. Ce deuxième mode de réalisation permet également de savoir si le véhicule cible O_VH se trouve dans la même voie de circulation que le véhicule référentiel R_VH, et en particulier lorsque cette voie de circulation est sinueuse, et /ou lorsque le véhicule référentiel R_VH ne se trouve pas précisément au milieu de la voie de circulation. Dans ce cas, une détection des marquages au sol (lignes latérales L1, L2) de la voie de circulation par la caméra est effectuée au préalable.

L'axe longitudinal AY est représenté sur les Fig. 2 à 6, ainsi que les marquages au sol L1, L2 de la voie de circulation du véhicule référentiel R_VH. Les éloignements longitudinaux d11, d12 et les écartement latéraux d21, d22 respectifs pour les deux véhicules cibles O_VH1 et O_VH2 sont également représentés sur ces Fig. 2 à 4 et 6. Un exemple de position POS2 d'un véhicule cible O_VH2 par rapport à un marquage au sol est également illustré. L'horizon HZ de la caméra est également représenté sur l'image acquise Ii.

Pour la position POS d'un véhicule cible O_VH, on regarde ainsi d'une part :
- si l'éloignement longitudinal d1 d'un véhicule cible détecté O_VH est inférieur ou supérieur à la première distance déterminée D1. La première distance déterminée D1 est définie de manière à être inférieure ou égale à une distance maximale de détection D_PMAX dans la région d'intérêt sous-échantillonnée Z0 (et à être également supérieure ou égale à une distance minimale de détection D_PMIN dans une région d'intérêt de pleine résolution comme on le verra par la suite). Pour l'application véhicule, dans un mode de réalisation non limitatif, cette distance D1 est de 40 mètres pour les raisons expliquées précédemment. On notera que le calcul de distances d'un véhicule par rapport à un axe de référence, ici l'axe longitudinal AY, étant bien connu de l'homme du métier, il n'est pas décrit ici ;

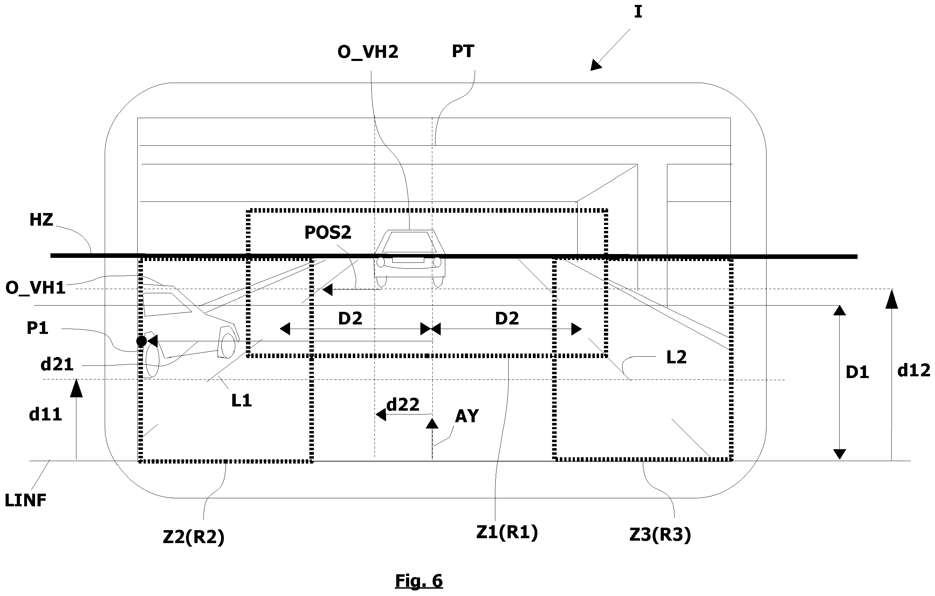

Et on regarde d'autre part :
- dans le cas du premier mode de réalisation, si son écartement latéral d2 est inférieur ou supérieur à une deuxième distance déterminée D2. Dans un mode de réalisation non limitatif, on prend un écartement latéral d2 maximum pour la comparaison avec la deuxième distance déterminée D2. On entend par écartement latéral d2 maximum la distance latérale la plus grande entre l'axe longitudinal AY et le véhicule cible O_VH. De façon pratique on prend un point P1 le plus extérieur du véhicule cible O_VH par rapport à l'axe AY tel qu'illustré à la Fig. 2 et à la Fig. 6. La deuxième distance D2 est définie de manière à pouvoir détecter un véhicule cible O_VH se trouvant à peu près devant le véhicule référentiel R_VH. Pour l'application véhicule, elle correspond à la largeur d'une voie de circulation divisée par deux. On notera que le calcul de distances d'un véhicule par rapport à un axe de référence, ici l'axe longitudinal AY, étant bien connu de l'homme du métier, il n'est pas décrit ici ;
   ou :
   - dans le cas du deuxième mode de réalisation, la position POS2 du véhicule cible O_VH en fonction des marquages au sol de la voie de circulation du véhicule référentiel R_VH. Si le véhicule cible O_VH se situe à droite d'un marquage gauche L1 et/ou à gauche d'un marquage droite L2, il est à dans la voie de circulation du véhicule référentiel R_VH (que l'on appelle également voie de circulation référentielle), sinon il est à l'extérieur, c'est-à-dire dans une voie adjacente. On notera que le calcul d'une position POS2 d'un véhicule cible par rapport à un repère déterminé dans une région d'intérêt d'une image, ici par rapport à des marquages au sol, (qui peut être effectué en 2D ou en 3D), étant bien connu de l'homme du métier, il n'est pas décrit ici.

Ainsi, cette sous-étape permet d'une part de vérifier qu'un véhicule cible O_VH se trouve dans la même voie de circulation ou dans une voie adjacente au véhicule référentiel R_VH mais également de vérifier s'il est proche ou loin.

En fonction du résultat du calcul de la position POS du véhicule cible détecté et de son analyse effectués à la troisième sous-étape 313, on passe à l'image suivante Ii+1 (soit à l'image I1 après l'étape d'initialisation pour la première image I0) et on revient à la deuxième étape 2) en sélectionnant un mode de détection MODj, puis en fonction du mode de détection sélectionné MODj, on définit au moins une région d'intérêt Zk (k = 0, 1, 2, 3 dans l'exemple pris) pour l'image suivante Ii+1 acquise par la caméra vidéo Cam, on applique une résolution donnée Rk à ladite région d'intérêt définie Zk; on détecte un objet cible O_VH dans la région d'intérêt obtenue Zk ; et on calcule une position POS de l'objet cible détecté O_VH par rapport à l'objet référentiel R_VH et ainsi de suite pour toute la séquence SQ d'images vidéo Ii, i allant de 0 à m (m entier), etc. acquises par la caméra vidéo Cam.

En partant du premier mode de détection MOD1, la sélection d'un mode de détection MODj pour l'image suivante Ii+1 est faite de la manière suivante dans les cas suivants :
- Si on détecte toujours un véhicule cible O_VH dans la région d'intérêt Z0 et qu'il se situe dans la voie de circulation référentielle et qu'il est proche (d1 < D1), on demeure dans le premier mode de détection MOD1, peu importe qu'il y ait des véhicules cibles proches ou lointains dans les voies adjacentes.
- Si on détecte toujours un véhicule cible O_VH dans la région d'intérêt Z0 et qu'il se situe dans la voie de circulation référentielle et qu'il est lointain (D1 < d1 < 50m), on sélectionne le deuxième mode de détection MOD2, peu importe qu'il y ait des véhicules cibles proches ou lointains dans les voies adjacentes.
- Si on ne détecte plus de véhicule cible O_VH dans la voie de circulation référentielle (d1> 50m > D1), on sélectionne le deuxième mode de détection MOD2, peu importe qu'il y ait des véhicules cibles proches ou lointains dans les voies adjacentes.
- Si on détecte un véhicule cible O_VH dans la région d'intérêt Z0 et qu'il coupe un marquage au sol de la voie de circulation référentielle et qu'il est proche (d1 < D1), on demeure dans le
   premier mode MOD1. Cela signifie que le véhicule référentiel R_VH est doublé par un véhicule cible O_VH par la droite ou par la gauche, et dans ces cas, ce dernier vient des côtés.

### Deuxième mode de détection MOD2.

Le deuxième mode de détection MOD2, que l'on appellera également mode objets lointains, est décrit à la Fig. 1 et de manière détaillé ci-après. Il est décrit dans un exemple non limitatif pour la deuxième image acquise I1.

Selon ce mode, *dans une première sous-étape 321),* on définit trois régions d'intérêt Z1, Z2, Z3 de résolutions R1, R2 et R3 respectives associées dans l'image acquise I1.

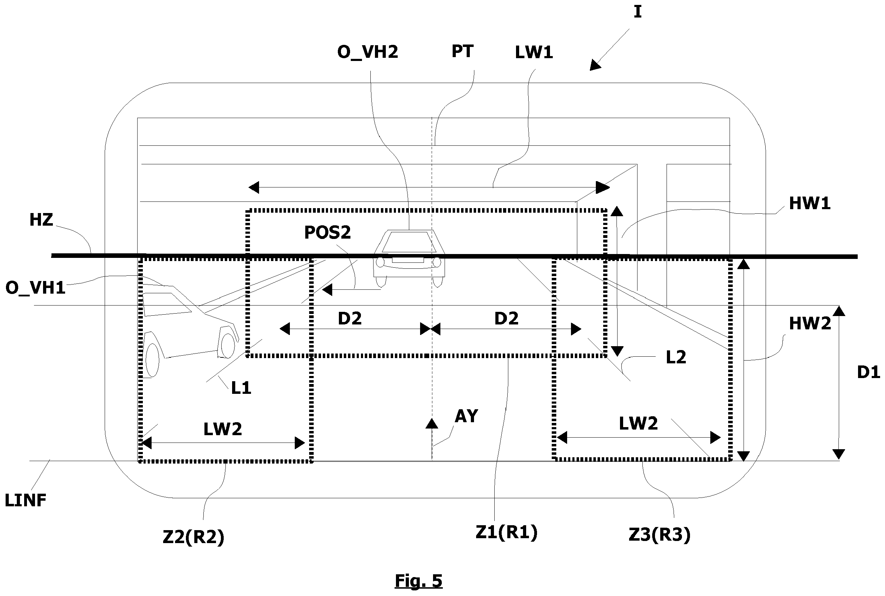

Selon un mode de réalisation non limitatif, la première région d'intérêt Z1 est à une première résolution R1 permettant de détecter précisément un objet cible O_VH se situant notamment au-delà de la distance déterminée D1, et les deux autres sont à une deuxième résolution R2, R3 permettant de détecter précisément un objet cible O_VH se situant notamment par-devant la distance déterminée D1. Ces trois régions sont illustrées à la Fig. 5 et à la Fig. 6.

Dans un mode de réalisation non limitatif, la première région d'intérêt Z1 est centrée sur l'image acquise, et est de largeur déterminée LW1 et de résolution R1 égale à celle de l'image acquise. Cette première résolution est égale à la résolution de l'image acquise, soit de pleine résolution.

Les dimensions largeur LW1 et hauteur HW1 de cette première région d'intérêt Z1 sont déterminées de telle sorte que les véhicules cibles O_VH ayant un éloignement longitudinal d1 supérieur à la première distance D1, égal ici à 40 mètres, et circulant dans la même voie de circulation que le véhicule référentiel R_VH puissent être détectés précisément et en entier.

Ainsi, dans un mode de réalisation non limitatif, la largeur LW1 est égale à la largeur de la voie sur laquelle circule le véhicule référentiel R_VH. De façon pratique, on l'a prend égale à la projection des lignes latérales formées par les marquages au sol L1, L2 formant la voie de circulation sur l'image telles qu'illustrées à la Fig. 5. Cela permet de détecter les véhicules cibles O_VH sur la même voie de circulation et se situant entre la distance déterminée D1, soit ici de 40 mètres, et une troisième distance D3 par rapport au véhicule référentiel R_VH. Cette troisième distance D3 correspond à une portée maximale de détection pour une partie d'image en pleine résolution. Dans un exemple non limitatif, elle est prise égale à 100 mètres.

On rappellera que la première distance D1 est définie de manière à être inférieure ou égale à une distance maximale de détection D_PMAX dans une région d'intérêt de résolution réduite telle que Z2 et Z3 et être également supérieure ou égale à une distance minimale de détection D_PMIN dans une région d'intérêt de pleine résolution telle que Z1. En général, la portée minimale de détection D_PMIN d'un objet cible dans une image en pleine résolution telle que définie ici, est de 35 mètres (tandis que la portée maximale de détection D_PMAX d'un objet cible dans une image en résolution réduite telle que définie ici, est de 50 mètres comme décrit précédemment). On la prend donc, dans l'exemple, un peu inférieure à D_PMAX et un peu supérieure à D_PMIN.

Ainsi, pour avoir cette première distance déterminée D1 est de 40 mètres afin d'avoir une marge de sécurité c'est-à-dire pour avoir une détection certaine, et dans une région d'intérêt de résolution réduite et dans une région d'intérêt de pleine résolution. Bien entendu, cette première distance D1 peut être ajustée.

Par ailleurs, la hauteur HW1 est également déterminée de manière à obtenir un temps de calcul acceptable pour la détection d'un véhicule cible O_VH se trouvant dans la première région d'intérêt Z1. Ainsi, dans un exemple non limitatif, la largeur LW1 de la première région d'intérêt Z1 est égale à 384 pixels et sa hauteur HW1 est égale à 72 pixels.

Le fait d'avoir cette première région d'intérêt centrale Z1 en pleine résolution, permet de détecter précisément des véhicules cibles qui ont un éloignement longitudinal d1 grand, ici dans l'exemple pris, au delà des 40 mètres et jusqu'à 100 mètres.

Cependant, étant donné que cette région obtenue Z1 en pleine résolution est coupée («cropped en anglais») par rapport à l'image acquise I1, cela permet un traitement rapide et en temps réel de la détection puisque la région obtenue Z1 est à 384*72 pixels au lieu de 640*480 pixels pour l'image acquise I1.

Dans un mode de réalisation non limitatif, les deux autres régions d'intérêt Z1 et Z2 sont des régions d'intérêt prises sur les côtés respectifs droit et gauche de l'image I1 et sont sous-échantillonnées («sub-sampled» en anglais), c'est-à-dire de résolution inférieure R2, R3 par rapport à celle de l'image acquise I1.

Dans une première variante, elles sont de même résolution (R2=R3). Dans un exemple non limitatif de la première variante, leur résolution est de 320*72 pixels, soit la hauteur HW2 de 320 pixels et la largeur LW2 de 72 pixels. Dans une seconde variante, elles sont de résolutions différentes (R2≠ R3).

Le fait d'avoir une résolution réduite permet de détecter précisément des véhicules cibles O_VH proches du véhicule référentiel R_VH, ici dans l'exemple pris, jusqu'à 40 mètres, et en particulier les véhicules cibles O_VH qui doublent le véhicule référentiel R_VH par exemple.

On notera que, dans un exemple non limitatif, les deux dernières régions d'intérêt Z2 et Z3 comportent une intersection avec la première région d'intérêt Z1. De façon pratique, comme on peut le voir à la Fig 5 et à la Fig. 6, la deuxième et la troisième régions d'intérêt comportent une largeur LW2 définie de telle sorte qu'elles empiètent sur les lignes latérales L1 et L2 d'une voie de circulation du véhicule référentiel R_VH. Le fait que les régions d'intérêt Z1, Z2 et Z3 se chevauchent permet d'avoir un traitement continu de la détection quand un véhicule cible change de région Z, et quand on change de mode de détection. Cela permet de suivre un véhicule cible de façon continue que le véhicule cible soit proche ou lointain, ou devienne proche ou lointain, et ce sans re-valider sa nature. Cela permet en outre de suivre de façon continue un véhicule cible quand il change de voie de circulation sans effectuer de nouveau une détection et sans re-valider sa nature.

Par ailleurs, on notera que dans un mode de réalisation non limitatif, les trois régions d'intérêt Z1, Z2, et Z3 sont définies de manière à ce que l'ensemble des contours d'un véhicule cible O_VH puissent être contenus dans une des régions d'intérêt et qu'il n'y ait pas de contour se retrouvant entre deux régions d'intérêt. Ainsi, un véhicule cible O_VH sera toujours affiché en entier dans une seule région d'intérêt. Cela évite des distorsions sur les contours d'un véhicule cible, distorsions qui rendent difficile une détection d'objet cible de manière générale. On prendra ainsi, dans un exemple non limitatif, le coin droit en haut de la région d'intérêt sous-échantillonnée Z2 de telle manière qu'elle atteigne la troisième distance D3 égale à 100 mètres dans l'exemple pris. Il en va de même pour le coin gauche en haut de la région d'intérêt sous-échantillonnée Z3.

Ainsi, grâce à ces trois régions d'intérêt, on détectera non seulement les véhicules cibles O_VH proches et situés dans les voies adjacentes (un véhicule proche dans la voie du véhicule référentiel R_VH ne sera pas détecté sauf si 35m < d1 < D1) (dans l'exemple de la Fig. 2, un premier véhicule cible O_VH1), mais également les véhicules cibles O_VH lointains situés dans la voie du véhicule référentiel ou dans les voies adjacentes (dans l'exemple de la Fig. 2, un deuxième véhicule cible O_VH2) et ce en temps réel et sans risque de se tromper sur la nature de l'objet cible puisque la détection sera plus précise.

*Dans une deuxième sous-étape 322),* on détecte si un véhicule cible O_VH est présent dans une des trois régions d'intérêt obtenues Z1, Z2 et Z3.

Tel que décrit précédemment (à la deuxième sous-étape 312), la détection d'un objet cible dans une image vidéo étant bien connue de l'homme du métier, elle n'est pas décrite ici. Cette deuxième sous-étape 322) est équivalente à la deuxième sous-étape décrite précédemment 312) mais appliquée aux deux régions d'intérêt mentionnées Z2 et Z3. Pour ce qui est de la première région d'intérêt Z1, un véhicule cible O_VH est détecté précisément s'il se situe au-delà de la première distance D1 et également s'il est au delà de la distance minimale de détection D_PMIN, ici 35 mètres.

*Dans une troisième sous-étape 323)*, on analyse la position POS du véhicule cible O_VH détecté, on passe à l'image suivante Ii+1, et en fonction du résultat de cette analyse on sélectionne un mode de détection MODj pour l'image suivante Ii+1 etc.

En partant du deuxième mode de détection MOD2, la sélection d'un mode de détection MODj pour l'image suivante Ii+1 est faite de la manière suivante dans les cas suivants :
- Si on détecte toujours un véhicule cible O_VH lointain et qu'il se situe dans la voie de circulation référentielle (d1 > D1) (il y a un véhicule cible dans la région Z1), on demeure dans le deuxième mode de détection MOD2, peu importe qu'il y ait des véhicules cibles proches (régions Z2 ou Z3) ou lointains (région Z1) dans les voies adjacentes.
- Si on détecte toujours un véhicule cible O_VH et qu'il se situe dans la voie de circulation référentielle et qu'il est proche (35m < d1 < D1) (il y a un véhicule cible dans la région Z1), on sélectionne le premier mode de détection MOD1, peu importe qu'il y ait des véhicules cibles proches (régions Z2 ou Z3) ou lointains (région Z1) dans les voies adjacentes.
- Si on ne détecte plus de véhicule cible O_VH dans la voie de circulation référentielle (d1> D3) (il n'y a plus de véhicule cible dans la région Z1), on demeure dans le deuxième mode de détection MOD2, peu importe qu'il y ait des véhicules cibles proches (régions Z2 ou Z3) ou lointains (région Z1) dans les voies adjacentes. Cela provient du fait que le véhicule référentiel R_VH peut rattraper par la suite un véhicule cible O_VH, dans ce cas, ce dernier venant donc de l'horizon.
- Si on détecte un véhicule cible O_VH qui coupe un marquage au sol de la voie de circulation référentielle et qu'il est proche (d1 < D1), on sélectionne le premier mode MOD1 (peu importe qu'il y ait un véhicule cible lointain sur la voie de circulation référentielle ou non). Cela signifie que le véhicule référentiel R_VH est doublé par un véhicule cible O_VH par la droite ou par la gauche, et dans ces cas, ce dernier vient des côtés.
- S'il n'existe aucun véhicule cible lointain sur la voie de circulation référentielle, mais que l'on détecte un véhicule cible O_VH qui coupe un marquage au sol de la voie de circulation référentielle et qu'il est lointain (D1 < d1), on demeure dans le deuxième mode MOD2. Cela signifie que le véhicule cible O_VH double le véhicule référentiel R_VH au loin par la droite ou par la gauche, et dans ces cas, ce dernier devient un véhicule cible lointain sur la voie de circulation référentielle.

Dans l'exemple de la Fig. 6, on a détecté un premier véhicule cible O_VH1 proche dans la deuxième région Z2 et dans une voie adjacente, et un deuxième véhicule cible lointain O_VH2 dans la même voie de circulation que celle du véhicule référentiel R_VH. Le mode de détection MODj sélectionné pour la prochaine image I2 sera donc le deuxième mode de détection MOD2.

On remarquera qu'une transition (passage) d'un mode de détection à un autre est notamment fonction de :
- la présence du véhicule cible O_VH dans la voie de circulation du véhicule référentiel R_VH ou non (définie au moyen de l'écartement latéral d2 ou de la position POS2 du véhicule cible O_VH par rapport à un marquage au sol de la voie de circulation référentielle), et
- son éloignement longitudinal, à savoir s'il est proche (d1<D1) ou lointain (d1>D1).

On remarquera également que le fait de choisir la première distance D1 de manière à ce qu'elle soit inférieure ou égale à une distance maximale de détection D_PMAX dans une région d'intérêt de résolution réduite et à ce qu'elle soit également supérieure ou égale à une distance minimale de détection D_PMIN dans une région d'intérêt de pleine résolution permet d'effectuer une transition d'un mode de détection à un autre mode de détection de manière continue.

On notera que les temps de calcul entre le premier mode MOD1 et le deuxième mode MOD2 sont à peu près équivalents. En effet, en ce qui concerne le premier mode MOD1, on a : 320*240 = 76800 pixels à traiter lorsque l'on prend un pixel sur deux dans l'exemple pris.

En ce qui concerne le deuxième mode MOD2, on a : 320*72+72*384+320*72 = 73728 pixels à traiter.

On notera également que le traitement pour ces deux modes MOD1 et MOD2 est beaucoup plus rapide qu'un traitement d'une image complète Ii en pleine résolution de 640*480 = 307200 pixels. Enfin, on notera que toutes les étapes et sous-étapes du procédé décrit ci-dessus sont effectuées sur l'ensemble des images acquises par la caméra vidéo Cam et ce en temps réel, c'est-à-dire que l'ensemble des étapes (sous-étapes inclus) ne prennent pas plus de 1/30 seconde dans l'exemple de 30 images par seconde acquises par la caméra Cam.

Enfin, **dans une quatrième étape 4)**, dans le cas où un véhicule cible O_VH est détecté, alors un traitement adéquate CD en temps réel sur le véhicule référentiel R_VH peut être exécuté.

Dans des exemples non limitatifs, il peut s'agir de :
- faire un suivi automatique de véhicule cible O_VH à vitesse constante,
- de ralentir automatiquement le véhicule référentiel R_VH pour maintenir une distance de sécurité par rapport à un véhicule cible O_VH,
- d'envoyer un signal d'alerte au conducteur du véhicule référentiel R_VH de manière à ce qu'il ralentisse, etc.

On notera que cette quatrième étape se fait au fur et à mesure du traitement des images vidéo par le procédé décrit ci-dessus.

Ainsi, le traitement adéquate CD tel que par exemple l'adaptation automatique de la vitesse du véhicule référentiel R_VH est exécuté en temps réel puisque il est effectué après chaque détection d'objet cible O_VH, une détection étant effectuée à chaque acquisition d'image Ii. De plus, une telle adaption de vitesse est précise puisque la détection d'un véhicule cible O_VH est précis comme on vient de le voir précédemment.

Ainsi, si un véhicule référentiel R_VH suit un véhicule cible O_VH lointain, et si la vitesse du véhicule référentiel R_VH est plus grande que celle du véhicule cible O_VH, la vitesse du véhicule référentiel diminue automatiquement par exemple dès que le véhicule cible O_VH devient proche grâce au procédé décrit. Par contre, dès qu'il s'éloigne et devient lointain, la vitesse peut augmenter automatiquement par exemple ou on peut envoyer un signal au conducteur du véhicule référentiel R_VH pour lui indiquer que la fonction adaptation automatique de la vitesse n'est plus active.

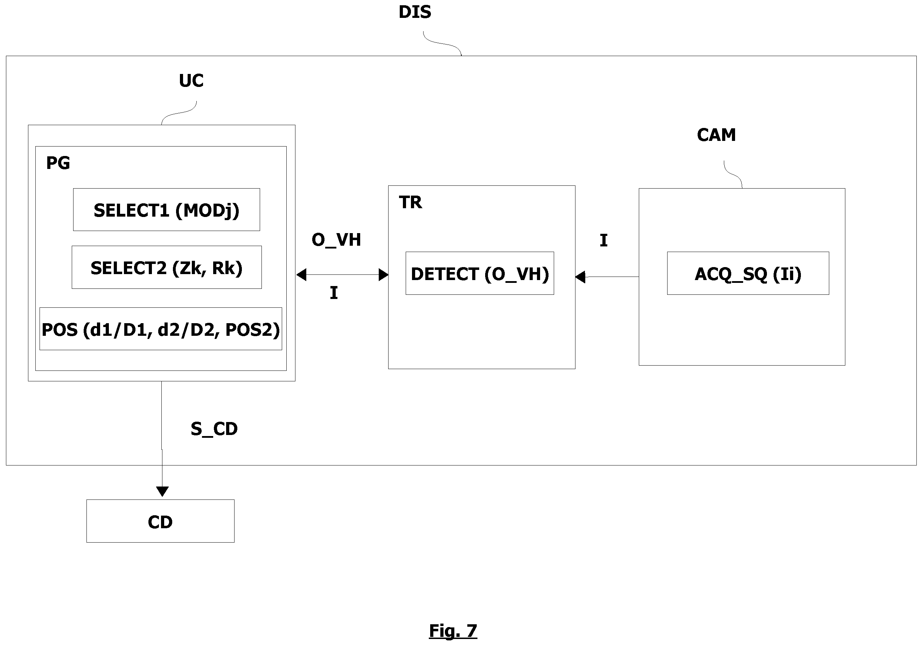

Le procédé de l'invention est mis en oeuvre par un dispositif DISP de détection représenté à la Fig. 7.

Ce dispositif DISP comporte notamment :
- un dispositif de traitement d'images TR pour notamment :
   ∘ détecter un objet cible O_VH dans une région d'intérêt de résolution donnée Zk dans une image acquise par la caméra vidéo Cam ; et
   ∘ vérifier la nature de l'objet cible (véhicule dans l'exemple pris, ou autre tel que piéton, panneau de signalisation etc.)
- une unité de contrôle UC pour notamment :
   ∘ sélectionner un mode de détection MODj en fonction d'une position POS d'un objet cible O_VH, dans une image acquise par la caméra vidéo Cam, par rapport à un objet référentiel donné R_VH ;
   ∘ en fonction du mode de détection sélectionné MODj, définir au moins une région d'intérêt Zk dans une image suivante acquise par la caméra vidéo Cam ;
   ∘ appliquer une résolution donnée Rk à ladite région d'intérêt définie Zk ;
   ∘ calculer une position POS de l'objet cible détecté O_VH par rapport à l'objet référentiel R_VH ; et
   ∘ envoyer un signal de commande S_CD pour exécuter un traitement adéquat CD en fonction de la détection.

L'unité de contrôle UC permet en outre d'effectuer les sous-étapes décrites précédemment, et notamment :
- calculer un éloignement longitudinal d1 ;
- calculer un écartement latéral d2 ; et
- calculer une position POS2 d'un objet cible O_VH par rapport à un repère déterminé, ici un marquage au sol, dans une région d'intérêt d'une image.

Dans un mode de réalisation non limitatif, le dispositif de détection DISP peut en outre comporter la caméra vidéo Cam permettant d'acquérir une image. Elle est par exemple du type VGA de définition 640*480 et comporte une lentille (non représentée) à cet effet. On notera que dans ce cas, le dispositif de traitement d'images TR peut également se trouver dans la caméra vidéo Cam.

On notera que la mise en oeuvre du procédé de détection exposé ci-dessus peut être effectuée au moyen d'un dispositif micro-programmé, ou même d'une logique câblée.

Ainsi, le dispositif de détection DISP peut comporter un produit programme d'ordinateur PG comportant une ou plusieurs séquences d'instructions exécutables par une unité de traitement d'information telle qu'un microprocesseur, ou d'une unité de traitement d'un micro-contrôleur, d'un ASIC, d'un ordinateur etc., l'exécution desdites séquences d'instructions permettant une mise en oeuvre du procédé décrit.

Un tel programme d'ordinateur PG peut être inscrit en mémoire non volatile inscriptible de type ROM ou en mémoire non volatile réinscriptible de type EEPROM. Ledit programme d'ordinateur PG peut être inscrit en mémoire en usine ou encore chargé en mémoire ou téléchargé à distance en mémoire. Les séquences d'instructions peuvent être des séquences d'instructions machine, ou encore des séquences d'un langage de commande interprétées par l'unité de traitement au moment de leur exécution.

Dans l'exemple non limitatif de la Fig. 7, le programme d'ordinateur PG est inscrit dans une mémoire de l'unité de contrôle UC. Bien entendu, au lieu d'un seul programme PG, on pourrait également avoir deux programmes différents pour effectuer d'une part le traitement d'image par le dispositif de traitement d'image TR et d'autre part effectuer les étapes de l'unité de contrôle UC.

Ainsi, l'invention est définie par les revendications et présente notamment les avantages suivants :
- elle permet de détecter des objets cibles dans des endroits clefs, sans pour autant traiter une image entière en pleine résolution. En conséquence, la détection peut se faire en temps réel ;
- l'image traitée par le procédé décrit dépend de la détection d'un objet cible et notamment de la position à laquelle il se trouve par rapport à un objet référentiel. La nature de l'image traitée n'est donc pas toujours la même, ce qui permet d'optimiser son traitement. On ne perd ainsi pas de temps à traiter des régions d'intérêt d'images qui ne sont pas intéressantes (là où il n'y a aucun objet cible ou l'objet cible est trop distordu ou petit pour permettre une détection correcte) ;
- elle évite d'avoir des objets cibles dénaturés du fait que les régions d'intérêt Z0, Z1, Z2 et Z3 ne sont pas distordues. En conséquence, la détection d'objets est précise et facile. On notera qu'en général une détection se base sur des analyses de symétrie ou de contours horizontaux/verticaux ce qui rend plus difficile une telle détection lorsqu'une image est distordue ;
- elle permet de garder un échantillonnage constant dans chaque région d'intérêt définie Z0, Z1, Z2 et Z3. Ainsi, comme les contours d'un objet cible se retrouvent en totalité dans une région d'intérêt, ses contours ne sont pas distordus ;
- elle permet de détecter précisément aussi bien des objets cibles proches que des objets cibles lointains du fait de l'adaptation de l'échantillonnage de l'image ou partie d'image en fonction d'une position proche ou lointaine, et ce en temps réel ;
- elle permet d'effectuer un même traitement pour la détection d'un objet dans une région d'image sous-échantillonnée Z0, Z2 et Z3 ou une région d'image coupée Z1 ;
- elle permet d'effectuer un traitement adéquat en temps réel en fonction du résultat de la détection ;
- elle permet d'effectuer une détection d'objet cible à chaque acquisition d'image Ii, la détection se faisant ainsi en temps réel, ce qui permet un traitement adéquate par la suite tel qu'un suivi de véhicule ou adaptation de la vitesse du véhicule référentiel, en temps réel également ;
- elle permet de suivre de façon continue un objet cible grâce au fait que les régions définies dans le deuxième mode de détection ont une intersection; et
- elle permet de faire des transitions continues entre un mode de détection vers un autre mode de détection, grâce à la première distance déterminée D1 qui est définie par rapport à un seuil de détection maximal et minimal qui est fonction de la résolution d'une région d'intérêt.

## Revendications

1. Procédé de détection d'un objet cible (O) dans un environnement à l'avant d'un véhicule référentiel (R_VH), l'objet cible (O) se trouvant dans le champ d'une caméra vidéo (Cam) du véhicule référentiel (R_VH), la caméra (Cam) étant apte à acquérir une pluralité d'images (Ii), le procédé comportant les étapes de :
- sélectionner un mode de détection (MOD1, MOD2) en fonction d'une position (POS) d'un objet cible (O_VH), dans une image (Ii) acquise par la caméra vidéo (Cam), par rapport audit véhicule référentiel(R_VH), le mode de détection étant sélectionné parmi un premier mode de détection (MOD1) et un deuxième mode de détection (MOD2);
- en fonction du mode de détection sélectionné (MOD1, MOD2), définir au moins une région d'intérêt (Z0, Z1, Z2, Z3) dans ladite image (Ii) acquise par la caméra vidéo (Cam) ;
- appliquer une résolution donnée différente (R0, R1, R2, R3) à ladite région d'intérêt définie (Z0, Z1, Z2, Z3), en fonction de la position (POS) ;
- détecter ledit objet cible (O_VH) dans la région d'intérêt ainsi obtenue (Z0, Z1, Z2, Z3) ; et dans lequel
ledit premier mode de détection (MOD1) correspond à un sous-échantillonnage de ladite région d'intérêt (Z0) de ladite image acquise (Ii) et dans lequel
ledit deuxième mode de détection (MOD2) correspond à la définition de trois régions d'intérêt (Z1, Z2, Z3) dans ladite image acquise (Ii), dont la première (Z1) est de résolution égale à celle de l'image acquise (Ii) et les deux autres (Z2, Z3) sont de résolutions réduites (R2, R3).

2. Procédé de détection selon la revendication 1, dans lequel la position (POS) dudit objet cible (O_VH) est définie par un éloignement longitudinal (d1) dans un axe longitudinal (AY) dudit véhicule référentiel (R_VH).

3. Procédé de détection selon la revendication 1 ou 2, dans lequel la position (POS) dudit objet cible (O_VH) est en outre définie par un écartement latéral (d2) dans un axe longitudinal (AY) dudit véhicule référentiel (R_VH).

4. Procédé de détection selon la revendication 1 ou 2, dans lequel la position (POS) dudit objet cible (O_VH) est en outre définie par une position (POS2) de l'objet cible (O_VH) par rapport à un repère déterminé (L) dans la région d'intérêt définie (Z0, Z1, Z2, Z3).

5. Procédé de détection selon la revendication précédente, selon lequel le repère déterminé (L) dans une région d'intérêt est un marquage au sol (L1, L2) de la voie de circulation dudit véhicule référentiel (R_VH).

6. Procédé de détection selon l'une des revendications précédentes, dans lequel la sélection d'un premier mode de détection (MOD1) est effectuée si l'éloignement longitudinal (d1) de l'objet cible (O_VH) est inférieur à une première distance déterminée (D1).

7. Procédé de détection selon la revendication précédente, selon lequel la première distance déterminée (D1) est définie de manière à ce qu'elle soit inférieure ou égale à une distance maximale de détection (D_PMAX) dans une région d'intérêt de résolution réduite (Z0, Z2, Z3) et à ce qu'elle soit également supérieure ou égale à une distance minimale de détection (D_PMIN) dans une région d'intérêt de pleine résolution (Z1).

8. Procédé de détection selon l'une des revendications précédentes, dans lequel le deuxième mode de détection (MOD2) est en outre sélectionné si aucun objet cible (O_VH) n'est détecté.

9. Procédé de détection selon l'une des revendications précédentes 5 à 8, dans lequel la première région d'intérêt (Z1) est centrée sur l'image acquise (Ii) et est de largeur déterminée (LW1), qui préférentiellement correspond à environ une largeur de voie de circulation dudit véhicule référentiel (R_VH).

10. Procédé de détection selon l'une des revendications précédentes 4 à 9, dans lequel le procédé comporte en outre une étape d'initialisation dans laquelle le mode de détection sélectionné est le premier mode de détection (MOD1).

11. Procédé de détection selon l'une des revendications précédentes, dans lequel le procédé est mis en oeuvre pour la détection d'un objet cible (O_VH) correspondant à un véhicule automobile (VH2).

12. Dispositif (DISP) de détection d'un objet cible (O_VH) dans un environnement à l'avant d'un véhicule référentiel (R_VH), l'objet cible (O_VH) se trouvant dans le champ d'une caméra vidéo (Cam) du véhicule référentiel (R_VH), la caméra (Cam) étant apte à acquérir une pluralité d'images (Ii), le dispositif comportant :
- un dispositif de traitement d'images (TR) pour détecter un objet cible (O_VH) dans une région d'intérêt de résolution donnée (Z0, Z1, Z2, Z3) dans une image (Ii) acquise par la caméra vidéo (Cam) ; et
- une unité de contrôle (UC) pour :
∘ sélectionner un mode de détection (MOD1, MOD2) en fonction d'une position (POS) d'un objet cible (O_VH), dans une image (Ii) acquise par la caméra vidéo (Cam), par rapport audit véhicule référentiel (R_VH), le mode de détection étant sélectionné parmi un premier mode de détection (MOD1) et un deuxième mode de détection (MOD2);
∘ en fonction du mode de détection sélectionné (MOD1, MOD2), définir au moins une région d'intérêt (Z0, Z1, Z2, Z3) dans ladite image (Ii) acquise par la caméra vidéo (Cam) ;
∘ appliquer une résolution donnée différente (R0, R1, R2, R3) à ladite région d'intérêt définie (Z0, Z1, Z2, Z3) ;
∘ détecter ledit objet cible (O_VH) dans la région d'intérêt ainsi obtenue (Z0, Z1, Z2, Z3) ; et dans lequel
ledit premier mode de détection (MOD1) correspond à un sous-échantillonnage de ladite région d'intérêt (Z0) de ladite image acquise (Ii) et dans lequel
ledit deuxième mode de détection (MOD2) correspond à la définition de trois régions d'intérêt (Z1, Z2, Z3) dans ladite image acquise (Ii), dont la première (Z1) est de résolution égale à celle de l'image acquise (Ii) et les deux autres (Z2, Z3) sont de résolutions réduites (R2, R3).

13. Produit programme (PG) d'ordinateur comportant une ou plusieurs séquences d'instructions exécutables par une unité de traitement d'information, l'exécution desdites séquences d'instructions permettant une mise en oeuvre du procédé selon l'une quelconque des revendications précédentes 1 à 11.

## Patentansprüche

1. Verfahren zur Erfassung eines Zielobjekts (O) in einer Umgebung vor einem Referenzfahrzeug (R_VH), wobei sich das Zielobjekt (O) im Sichtfeld einer Videokamera (Cam) des Referenzfahrzeugs (R_VH) befindet, wobei die Kamera (Cam) geeignet ist, mehrere Bilder (Ii) zu erfassen, wobei das Verfahren die Schritte umfasst:
- Auswählen eines Erfassungsmodus (MOD1, MOD2) in Abhängigkeit von einer Position (POS) eines Zielobjekts (O_VH) in einem Bild (Ii), das von der Videokamera (Cam) erfasst wurde, in Bezug auf das Referenzfahrzeug (R_VH), wobei der Erfassungsmodus aus einem ersten Erfassungsmodus (MOD1) und einem zweiten Erfassungsmodus (MOD2) ausgewählt wird;
- in Abhängigkeit von dem ausgewählten Erfassungsmodus (MOD1, MOD2), Definieren wenigstens eines interessierenden Bereichs (Z0, Z1, Z2, Z3) in dem von der Videokamera (Cam) erfassten Bild (Ii);
- Anwenden einer unterschiedlichen gegebenen Auflösung (R0, R1, R2, R3) auf den definierten interessierenden Bereich (Z0, Z1, Z2, Z3) in Abhängigkeit von der Position (POS);
- Erfassen des Zielobjekts (O_VH) in dem so erhaltenen interessierenden Bereich (Z0, Z1, Z2, Z3); und wobei
der erste Erfassungsmodus (MOD1) einer Unterabtastung des interessierenden Bereichs (Z0) des erfassten Bildes (Ii) entspricht, und wobei der zweite Erfassungsmodus (MOD2) der Definition von drei interessierenden Bereichen (Z1, Z2, Z3) in dem erfassten Bild (Ii) entspricht, von denen der erste (Z1) eine Auflösung hat, die gleich derjenigen des erfassten Bildes (Ii) ist, und die beiden anderen (Z2, Z2) verringerte Auflösungen (R2, R3) haben.

2. Verfahren zur Erfassung nach Anspruch 1, wobei die Position (POS) des Zielobjekts (O_VH) durch eine longitudinale Entfernung (d1) in einer Längsachse (AY) des Referenzfahrzeugs (R_VH) definiert wird.

3. Verfahren zur Erfassung nach Anspruch 1 oder 2, wobei die Position (POS) des Zielobjekts (O_VH) außerdem durch einen seitlichen Abstand (d2) in einer Längsachse (AY) des Referenzfahrzeugs (R_VH) definiert wird.

4. Verfahren zur Erfassung nach Anspruch 1 oder 2, wobei die Position (POS) des Zielobjekts (O_VH) außerdem durch eine Position (POS2) des Zielobjekts (O_VH) in Bezug auf einen bestimmten Bezugspunkt (L) in dem definierten interessierenden Bereich (Z0, Z1, Z2, Z3) definiert ist.

5. Verfahren zur Erfassung nach dem vorhergehenden Anspruch, wobei der bestimmte Bezugspunkt (L) in einem interessierenden Bereich eine Fahrbahnmarkierung (L1, L2) der Fahrspur des Referenzfahrzeugs (R_VH) ist.

6. Verfahren zur Erfassung nach einem der vorhergehenden Ansprüche, wobei die Auswahl eines ersten Erfassungsmodus (MOD1) vorgenommen wird, falls die longitudinale Entfernung (d1) des Zielobjekts (O_VH) kleiner als ein bestimmter erster Abstand (D1) ist.

7. Verfahren zur Erfassung nach dem vorhergehenden Anspruch, wobei der bestimmte erste Abstand (D1) derart definiert wird, dass er kleiner oder gleich einem maximalen Erfassungsabstand (D_PMAX) in einem interessierenden Bereich mit verringerter Auflösung (Z0, Z2, Z3) ist, und derart, dass er außerdem größer oder gleich einem minimalen Erfassungsabstand (D_PMIN) in einem interessierenden Bereich mit voller Auflösung (Z1) ist.

8. Verfahren zur Erfassung nach einem der vorhergehenden Ansprüche, wobei der zweite Erfassungsmodus (MOD2) außerdem ausgewählt wird, falls kein Zielobjekt (O_VH) erfasst wird.

9. Verfahren zur Erfassung nach einem der vorhergehenden Ansprüche 5 bis 8, wobei der erste interessierende Bereich (Z1) auf dem erfassten Bild (Ii) zentriert wird und von einer bestimmten Breite (LW1) ist, welche vorzugsweise ungefähr einer Breite der Fahrspur des Referenzfahrzeugs (R_VH) entspricht.

10. Verfahren zur Erfassung nach einem der vorhergehenden Ansprüche 4 bis 9, wobei das Verfahren außerdem einen Initialisierungsschritt umfasst, in welchem der ausgewählte Erfassungsmodus der erste Erfassungsmodus (MOD1) ist.

11. Verfahren zur Erfassung nach einem der vorhergehenden Ansprüche, wobei das Verfahren für die Erfassung eines Zielobjekts (O_VH) durchgeführt wird, das einem Kraftfahrzeug (VH2) entspricht.

12. Vorrichtung (DISP) zur Erfassung eines Zielobjekts (O_VH) in einer Umgebung vor einem Referenzfahrzeug (R_VH), wobei sich das Zielobjekt (O_VH) im Sichtfeld einer Videokamera (Cam) des Referenzfahrzeugs (R_VH) befindet, wobei die Kamera (Cam) geeignet ist, mehrere Bilder (Ii) zu erfassen, wobei die Vorrichtung aufweist:
- eine Vorrichtung zur Verarbeitung von Bildern (TR) zum Erfassen eines Zielobjekts (O_VH) in einem interessierenden Bereich von gegebener Auflösung (Z0, Z1, Z2, Z3) in einem Bild (Ii), das von der Videokamera (Cam) erfasst wurde; und
- eine Steuereinheit (UC) zum:
∘ Auswählen eines Erfassungsmodus (MOD1, MOD2) in Abhängigkeit von einer Position (POS) eines Zielobjekts (O_VH) in einem Bild (Ii), das von der Videokamera (Cam) erfasst wurde, in Bezug auf das Referenzfahrzeug (R_VH), wobei der Erfassungsmodus aus einem ersten Erfassungsmodus (MOD1) und einem zweiten Erfassungsmodus (MOD2) ausgewählt wird;
∘ Definieren, in Abhängigkeit von dem ausgewählten Erfassungsmodus (MOD1, MOD2), wenigstens eines interessierenden Bereichs (Z0, Z1, Z2, Z3) in dem von der Videokamera (Cam) erfassten Bild (Ii);
∘ Anwenden einer unterschiedlichen gegebenen Auflösung (R0, R1, R2, R3) auf den definierten interessierenden Bereich (Z0, Z1, Z2, Z3);
∘ Erfassen des Zielobjekts (O_VH) in dem so erhaltenen interessierenden Bereich (Z0, Z1, Z2, Z3); und wobei
der erste Erfassungsmodus (MOD1) einer Unterabtastung des interessierenden Bereichs (Z0) des erfassten Bildes (Ii) entspricht, und wobei der zweite Erfassungsmodus (MOD2) der Definition von drei interessierenden Bereichen (Z1, Z2, Z3) in dem erfassten Bild (Ii) entspricht, von denen der erste (Z1) eine Auflösung hat, die gleich derjenigen des erfassten Bildes (Ii) ist, und die beiden anderen (Z2, Z3) verringerte Auflösungen (R2, R3) haben.

13. Computerprogrammprodukt (PG), welches eine oder mehrere Befehlsfolgen umfasst, die durch eine Informationsverarbeitungseinheit ausführbar sind, wobei die Ausführung dieser Befehlsfolgen eine Durchführung des Verfahrens nach einem der vorhergehenden Ansprüche 1 bis 11 ermöglicht.

## Claims

1. Method for detecting a target object (O) in an environment in front of a referential vehicle (R_VH), the target object (O) being located in the field of a video camera (Cam) of the referential vehicle (R_VH), the camera (Cam) being capable of acquiring a plurality of images (Ii), the method comprising the steps of:
- selecting a detection mode (MOD1, MOD2) according to a position (POS) of a target object (O_VH), in an image (Ii) acquired by the video camera (Cam), with respect to said referential vehicle (R_VH), the detection mode being selected from a first detection mode (MOD1) and a second detection mode (MOD2);
- according to the selected detection mode (MOD1, MOD2), defining at least one region of interest (Z0, Z1, Z2, Z3) in said image (Ii) acquired by the video camera (Cam);
- applying a different given resolution (R0, R1, R2, R3) to said defined region of interest (Z0, Z1, Z2, Z3), according to the position (POS);
- detecting said target object (O_VH) in the region of interest thus obtained (Z0, Z1, Z2, Z3); and wherein said first detection mode (MOD1) corresponds to a subsampling of said region of interest (Z0) of said acquired image (Ii) and wherein
said second detection mode (MOD2) corresponds to defining three regions of interest (Z1, Z2, Z3) in said acquired image (Ii), the first of which (Z1) is of a resolution equal to that of the acquired image (Ii) and the other two (Z2, Z3) are of reduced resolutions (R2, R3) .

2. Detection method according to Claim 1, wherein the position (POS) of said target object (O_VH) is defined by a longitudinal distance (d1) in a longitudinal axis (AY) of said referential vehicle (R_VH).

3. Detection method according to Claim 1 or 2, wherein the position (POS) of said target object (O_VH) is further defined by a lateral distance (d2) in a longitudinal axis (AY) of said referential vehicle (R_VH).

4. Detection method according to Claim 1 or 2, wherein the position (POS) of said target object (O_VH) is further defined by a position (POS2) of the target object (O_VH) with respect to a determined reference (L) in the defined region of interest (Z0, Z1, Z2, Z3).

5. Detection method according to the preceding claim, according to which the determined reference (L) in a region of interest is a marking on the ground (L1, L2) of the traffic lane of said referential vehicle (R_VH).

6. Detection method according to one of the preceding claims, wherein selecting a first detection mode (MOD1) is performed if the longitudinal distance (d1) of the target object (O_VH) is less than a first determined distance (D1) .

7. Detection method according to the preceding claim, according to which the first determined distance (D1) is defined so that it is less than or equal to a maximum detection distance (D_PMAX) in a reduced resolution region of interest (Z0, Z2, Z3) and that it is also greater than or equal to a minimum detection distance (D_PMIN) in a full resolution region of interest (Z1).

8. Detection method according to one of the preceding claims, wherein the second detection mode (MOD2) is further selected if no target object (O_VH) is detected.

9. Detection method according to one of the preceding Claims 5 to 8, wherein the first region of interest (Z1) is centred on the acquired image (Ii) and is of determined width (LW1), which preferably corresponds to approximately one width of the traffic lane of said referential vehicle (R_VH).

10. Detection method according to one of the preceding Claims 4 to 9, wherein the method further comprises an initialization step wherein the selected detection mode is the first detection mode (MOD1).

11. Detection method according to one of the preceding claims, wherein the method is implemented for detecting a target object (O_VH) corresponding to a motor vehicle (VH2) .

12. Device (DISP) for detecting a target object (O_VH) in an environment in front of a referential vehicle (R_VH), the target object (O_VH) being located in the field of a video camera (Cam) of the referential vehicle (R_VH), the camera (Cam) being capable of acquiring a plurality of images (Ii), the device comprising:
- an image processing device (TR) for detecting a target object (O_VH) in a region of interest of given resolution (Z0, Z1, Z2, Z3) in an image (Ii) acquired by the video camera (Cam); and
- a control unit (UC) for:
∘ selecting a detection mode (MOD1, MOD2) according to a position (POS) of a target object (0_VH), in an image (Ii) acquired by the video camera (Cam), with respect to said referential vehicle (R_VH), the detection mode being selected from a first detection mode (MOD1) and a second detection mode (MOD2);
∘ according to the selected detection mode (MOD1, MOD2), defining at least one region of interest (Z0, Z1, Z2, Z3) in said image (Ii) acquired by the video camera (Cam);
∘ applying a different given resolution (R0, R1, R2, R3) to said defined region of interest (Z0, Z1, Z2, Z3);
∘ detecting said target object (O_VH) in the region of interest thus obtained (Z0, Z1, Z2, Z3); and wherein
said first detection mode (MOD1) corresponds to a subsampling of said region of interest (Z0) of said acquired image (Ii) and wherein
said second detection mode (MOD2) corresponds to defining three regions of interest (Z1, Z2, Z3) in said acquired image (Ii), the first of which (Z1) is of a resolution equal to that of the acquired image (Ii) and the other two (Z2, Z3) are of reduced resolutions (R2, R3) .

13. Computer program (PG) product comprising one or more sequences of instructions executable by an information processing unit, the execution of said sequences of instructions making it possible to implement the method according to any one of the preceding Claims 1 to 11.
